# EUROPÄISCHE PATENTSCHRIFT

(11) **EP 1 617 112 B1**
(45) Veröffentlichungstag und Bekanntmachung des Hinweises auf die Patenterteilung: **24.09.2008**
(21) Anmeldenummer: 05010200.3
(22) Anmeldetag: 11.05.2005
(51) Int. Cl.: F16J 15/08, F16J 15/10, F16J 15/12, B29C 45/14

(54) **Dichtung mit Träger und deren Herstellung**
Gasket with carrier and its production method
Joint d'étanchéité comprenant un support et sa méthode de fabrication

(30) Priorität: 15.07.2004 DE 102004034236
(43) Veröffentlichungstag der Anmeldung: 18.01.2006
(73) Patentinhaber: Federal-Mogul Sealing Systems Bretten GmbH, 75015 Bretten (DE)
(72) Erfinder: Salameh, Ralf, 75053 Gondelsheim (DE); Walz, Timo, 75053 Gondelsheim (DE)
(74) Vertreter: Becker Kurig Straus

(56) Entgegenhaltungen:
- EP-A- 1 209 383
- DE-A1- 2 222 507
- DE-A1- 3 831 413
- DE-U- 8 902 600
- FR-A- 2 366 113
- US-A- 5 267 740
- US-A- 6 146 563

## Beschreibung

Die vorliegende Erfindung betrifft ein Verfahren zum Herstellen einer Dichtung in einem kontinuierlichen Prozess.

Bekannt sind bisher Dichtungen auf metallischen Trägerrahmen bzw. Träger unterschiedlichster Variationen, die an eine Mannigfaltigkeit an spezifischen Erfordernissen angepasst sind, und die eine Vielzahl an Variationen in der Gestaltung der metallischen Trägerrahmen aufweisen können. Im Bereich der Dichtungen mit Blechträgem sind bisher Herstellungsverfahren im Einsatz, mit Hilfe deren auf Bleche aus Aluminium oder Stahl als Träger dünne Elastomerschichten aufgebracht werden, zum Beispiel mittels Sprühen oder Aufdrucken. Bei Verfahren bei denen Material wie zum Beispiel Silikon über einen Roboter mit Dosierung aufgetragen wird und im Nachhinein ein Prägevorgang mit Werkzeug stattfindet, können mit unterschiedlichen Dichtungsgeometrien verwirklicht werden.

Ein Vorteil dieser bekannten und herkömmlich verwendeten Verfahren ist, dass die Fertigung hier in einem kontinuierlichen Prozess stattfinden kann, der mit dem Abspulen des Trägerrohlings von einer Spule bzw. einem so genannten Coil, beginnt und mit der fertigen Dichtung, die auf einem Trägerrahmen aufgebracht ist, endet. Ein entscheidender Nachteil dieser bekannten Verfahren ist jedoch, dass nur sehr wenige der bekannten und herkömmlich eingesetzten Elastomerwerkstoffe, die gewöhnlich im Gummi-Spritzverfahren verarbeitet werden, in diesen vorstehend kurz dargestellten herkömmlichen Verfahren verarbeitet werden können. Diese Elastomerwerkstoffe benötigen spezifische Prozessparameter (Druck, Temperatur,...) die nur im gewöhnlichen Gummi-Spritzverfahren erreicht werden. Zudem sind derartige Elastomerwerkstoffe geeignet, im wesentlichen die gesamten Anforderungen im Hinblick auf Werkstoffeigenschaften wie zum Beispiel Temperatur und Medienbeständigkeit abzudecken, die unter spezifischen Einsatzbedingungen zu erfüllen sind.

Um Dichtungen im herkömmlichen Elastomer-Spritzverfahren herzustellen, werden einzelne Trägerrahmen von Hand oder maschinell in einem Spritzwerkzeug eingelegt, so dass der Träger anschließend mit Elastomer umspritzt werden kann oder die elastomere Dichtung an der Rahmenkante anspritzbar ist. Bei diesen Elastomer-Spritzverfahren durchlaufen die Teile somit unterschiedliche Prozessschritte, die nicht im Sinne eines kontinuierlichen Prozesses verknüpfbar sind. Die überlicherweise Einlegeteile aus Metall werden zuvor in separaten Prozessschritten gestanzt. Bei kleineren Teilen werden teilweise mehrere Rahmenteile verbunden gestanzt und nach dem Durchlaufen aller Fertigungsschritte anschließend wieder getrennt. Um Dichtungen aus nach dem Durchlaufen aller Fertigungsschritte anschließend wieder getrennt. Um Dichtungen aus Elastomerwerkstoffen auf dünnen Blechen als Träger herzustellen, werden derartige dünne Trägerbleche durch Aufsprühen beschichtet oder die die dünne Trägerbleche durchlaufen so genannte "Beschichtungsvorhänge". Dichtungen, die in Prozessen hergestellt werden, bei denen Dichtungsmaterial zum Beispiel mit Hilfe eines Roboters aufgetragen werden, und bei bestimmten Dichtungsarten wird eine Dichtungsgeometrie bzw. eine Dichtungskontor über ein Prägewerkzeug eingeprägt.

Dichtungen aus herkömmlichen Dichtungs-Werkstoffen sind ferner reine Gummiformdichtungen oder Dichtungen mit Aluminium- oder Stahlträgerrahmen, bei denen die Dichtungsgeometrie angespritzt wird, oder der Trägerrahmen vollständig umspritzt wird. Alternative Dichtungen, deren Bauart auf dünne Bleche basiert, sind auf bestimmten Verarbeitungsverfahren beschränkt. Da dies im wesentlichen mittels Sprüh- oder Vorhangbeschichtungsverfahren geschieht, sind nur sehr dünne Schichten realisierbar. Diese Dichtungen werden im allgemeinen zur Erzeugung von höheren Linienpressungen gesickt. Das Aufbringen von Dichtlippen ist nicht möglich. Dichtungen bei denen auch Dichtlippen auf dünne Bleche aufgebracht werden, basieren typischerweise auf dem anorganischen Elastomerwerkstoff Silikon.

DE 2 222 507 offenbart ein Verfahren zum Herstellen einer Dichtung in einem kontinuierlichen Prozess, umfassend:
- Bereitstellen eines Trägers für die Dichtung;
- Kontinuierliches Zuführen des Trägers zu einer Spritzvorrichtung;
- Bereitstellen zumindest eines organischen Elastomerwerkstoffs;
- Zyklisches einseitiges oder beidseitiges Aufbringen des zumindest einen organischen Elastomerwerkstoffs auf den Träger als Dichtung mittels Aufspritzen ; und
- Freistanzen der Dichtung.

Aufgabe der vorliegenden Erfindung ist es, eine Dichtung und ein Verfahren für deren Herstellung bereitzustellen, die in einem kontinuierlichen Prozess unter Verwendung von organischen Elastomerwerkstoffen als Dichtungsmaterial herstellbar ist, wobei der verwendete Dichtungs-Werkstoff Eigenschaften aufweist, die sich überlicherweise nur mittels Spritzverfahren (Injection Molding) verarbeiten lassen.

Die Aufgabe wird gemäß dem Verfahren von Anspruch 1 gelöst.

Vorteilhafterweise ist der organische Elastomerwerkstoff ein Fluorkautschuk (FPM), Acrylatkautschuk, Polyacrylat-Acrylharz, Polyacrylat (ACM), Ethylenacrylat (AEM), Ethylenpropylen (EPDM) und/oder Hydriernitril (HNBR). Vorzugsweise weist der organische Elastomerwerkstoff im wesentlichen einen Anteil an flüchtigen Bestandteilen, der mittels thermogravimetrischer Analyse (TGA) bei 150°C über 0,5 Stunden gemessen wird, von ungefähr 0,1% und kleiner auf. Insbesondere weist der organische Elastomerwerkstoff eine Mooney-Viskosität

ML (1+4) bei 100°C in einem Bereich von ca. 20 bis 100, insbesondere in einem Bereich von ungefähr 25 bis 52, auf. Erfindungsgemäß besteht die Dichtung bereichsweise aus verschiedenen organischen Elastomerwerkstoffen. Erfindungsgemäß kann der Träger aus einem Trägerwerkstoff herstellbar sein, der Metalle, Kunststoffe und/oder Papier papierähnliche Werkstoffe umfasst.

Erfindungsgemäß weist die Dichtung Fixierbereiche für die Ausrichtung der Dichtung während des Spitzenverfahrens auf. Die Fixierbereiche umfassen hierbei insbesondere ein oder mehrere Fixierpunkt und/oder längliche Fixierbereiche, an denen ein Spritzwerkzeug führend und/oder ausrichtend angreifen kann.

Bevorzugt weist die Dichtung flächige Dichtbereiche und oder Dichtbereiche mit einer oder mehreren Dichtlippen auf. Insbesondere ist eine im wesentlichen beliebige Dichtungsgeometrie mittels des Spritzverfahrens realisierbar.

Günstigerweise weist die Dichtung zumindest ein Abstandelement in Form eines bereichsweise gefalteten Trägers oder bereichsweise geprägten Trägers auf.

Erfindungsgemäß wird ein Verfahren zum Herstellen einer Dichtung in einem kontinuierlichen Prozess bereitgestellt. Ein Träger wird für die Dichtung bereitgestellt. Der Träger wird kontinuierlich zu einer Spritzvorrichtung zugeführt, die in einem Spritzverfahren zyklisch einseitig oder beidseitig einen organischen Elastomerwerkstoff als Dichtung auf den Träger aufbringt. Nachfolgend wird die Dichtung frei gestanzt.

Vorteilhafterweise umfasst die Spritzvorrichtung ein Spritzwerkzeug, mit dessen Hilfe im wesentlichen beliebige Dichtungsgeometrien realisiert werden können.

Vorzugsweise wird im Spritzverfahren der organische Elastomerwerkstoff aufgespritzt und/oder angespritzt. Der aufgespritzte Elastomerwerkstoff wird von dem Träger unterstützend getragen während der angespritzte Elastomerwerkstoff an den Träger koppelt und sich im wesentlichen in bzw. auf trägerlose Bereiche erstreckt.

Vorteilhafterweise umfasst das Verfahren ferner ein Trocknen und/oder ein Tempern des organischen Elastomerwerkstoffs für eine vorbestimmte Trockungs- bzw. Temperzeit. Ferner kann das Verfahren ebenso ein Vorstanzen des Trägers vor dem Aufbringen des organischen Elastomerwerkstoffs einschließen. Weiterhin könnte das Verfahren ebenfalls ein Prägen und/oder ein Stanzen der Dichtung vorsehen.

Die Erfindung wird anhand nachfolgender Zeichnungen beispielhaft anhand einer Ausführungsform der Erfindung näher erläutert. In den Zeichnungen zeigen:
- Fig. 1: eine perspektivische Ansicht einer Dichtung gemäß einer Ausführungsform der Erfindung; und
- Fig. 2a bis 2f: perspektivische schematische Ansichten weiterer Ausführungsformen der Erfindung.

In den Figuren wie auch in der Beschreibung werden gleiche Bezugszeichen verwendet, um gleiche oder ähnliche Bauteile oder Elemente zu bezeichnen.

Erfindungsgemäß wird nachfolgend eine Lösung vorgeschlagen, die die Aufgabe erfüllt und ein Verfahren bereitstellt, das einen kontinuierlichen Fertigungsprozess unter Verwendung von organischen Dichtungs-Werkstoffen gestattet. Das Trägermaterial (Metall, Papier, Kunststoff) wird von einem Coil bzw. einer Rolle zugeführt. In einem optionalen Vorbehandlungsschritt kann das Material bestimmte Beschichtungsstufen durchlaufen falls dies erforderlich ist. Falls bestimmte Vorstanzoperationen oder Prägeoperationen notwendig sind kann das Band eine Stanze oder Prägepresse oder Kombination durchlaufen die Bereiche vorstanzt, prägt oder beides. Dann wird das Band durch eine Elastomer-Spritzmaschine geführt die zyklisch die Dichtung beidseitig oder einseitig aufspritzt oder anspritzt.

Als Werkstoffe für dieses Verfahren werden erfindungsgemäß keine herkömmlichen anorganischen Elastomere wie zum Beispiel Silikon verwendet sondern vielmehr organische Elastomere wie zum Beispiel Fluorkautschuke (FPM), Acrylatkautschuke, Polyacrylat-Acrylharze, Polyacrylate (ACM), Ethylenacrylate (AEM), Ethylenpropylen (EPDM), Hydriernitril (HNBR) und dergleichen. Diese organischen Elastomere, die im Elastomer-Spritzprozess verarbeitet werden, weisen typischerweise eine Mooney-Viskosität ML (1+4) bei 100°C in einem Bereich von ca. 20 bis 100 auf. Die genaue Mooney-Viskosität ist abhängig von der Werkstoffwahl und der Shore A Härte des Werkstoffs. Für den Einsatz beim Überspritzen von Trägermaterialien mit dünnen Elastomerschichten im Spritzprozess sollte die Mooney-Viskosität ML (1+4) bei 100°C in einem Bereich von ungefähr 25 bis 52 liegen.

Die erfindungsgemäßen Dichtungen eignen sich insbesondere für Anwendungen, bei denen der Anteil von flüchtigen Bestandteilen, die aus der Dichtung entweichen können, ein vorbestimmtes geringes Maß nicht übersteigen darf. Derartige Anforderungen werden beispielsweise an Dichtungen in Brennstoffzellen gestellt, bei denen die aus den Dichtungen austretenden flüchtigen Bestandteile den Betrieb und die Funktion beeinträchtigen können. Bei herkömmlichen Dichtungen, die auf der Basis von gängigen Elastomerwerkstoffen ausgebildet werden, liegt der Anteil an flüchtigen Bestandteilen, der mittels thermogravimetrischer Analyse (TGA) bei 150°C über 0,5 Stunden gemessen wird, von ungefähr 1% und weniger. Die erfindungsgemäßen Dichtungs-Werkstoffe weisen im Gegensatz zu den vorstehend beschriebenen herkömmlichen Dichtwerkstoffen einen Anteil an flüchtigen Bestandteilen, der mittels thermogravimetrischer Analyse (TGA) bei 150°C über 0,5 Stunden gemessen wird, von ungefähr 0,1% und weniger auf. Dieser Anteil an flüchtigen Bestandteilen bei den erfindungsgemäßen Dichtungs-Werkstoffen ist signifikant geringer, so dass diese sich für Anwendungen eignen, an die vorstehend erläuterte Anforderungen an einen möglichst geringen Anteil an flüchtigen Bestandteilen gestellt werden.

Nach dem Durchlaufen der Spritzmaschine kann das Band eine Temperstrecke durchlaufen die das Material vulkanisiert. Ansonsten können nun auch am Teil mit aufgespritzter Dichtung noch Präge- oder Stanzoperationen nachgeschaltet sein. Die Teile werden anschließend frei gestanzt und sind bis auf eine eventuell abschließende Prüfung und/oder visuelle Inspektion fertig gestellt. Falls längere Temperzeiten erforderlich sind können die fertigen Teile nun direkt einem kontinuierlichen Temperprozess zugeführt werden und sind danach fertig gestellt.

Dieser erfindungsgemäße Prozess und die dadurch erzeugte neue Dichtungsart verbindet die Vorteile einer in einem kontinuierlichen Prozess hergestellten Dichtung (wenig Handhabungsaufwand, geringerer Werkstoffeinsatz, kostengünstigere Herstellung) mit dem Einsatz einer großen Materialvielfalt von organischen Elastomeren im höheren Temperaturbereich und mit verbesserter Beständigkeit. Mit Hilfe des vorgeschlagenen Spritzverfahrens ist es ebenso möglich unterschiedliche Dichtungs-Werkstoffe in unterschiedlichen Dichtbereichen aufzutragen.

In einer Ausführungsform der erfindungsgemäßen Dichtung basiert diese auf einem Träger, dessen Trägerwerkstoff zum Beispiel Metall, Kunststoff, Papier, papierartiger Werkstoff oder ähnliches umfasst, auf dem eine Dichtungsgeometrie einseitig oder beidseitig aufgespritzt wird. Bei besonderen Varianten können auch Teilbereiche der Dichtung von aufgespritzten Bereichen in angespritzte Bereiche übergehen die nicht mehr durch den Träger gestützt werden. Auf den Träger wird in den Dichtungsbereichen eine dünne organische Elastomerschicht aufgespritzt. Auf dieser sind vorzugsweise 2 Dichtlippen angeordnet. Alternativ kann die Dichtungskontur bzw. die Dichtungsgeometrie ebenso mit einer oder mehreren Dichtlippen ausgeführt werden. Weiterhin sind ebenfalls Teilbereiche möglich, in denen keine Dichtlippe angeordnet ist. Auf der Dichtung befinden sich in den aufgespritzten Bereichen Stellen an denen der Träger im Werkzeug in der Mittellage gehalten wird damit der Träger in der Mitte zwischen den beiden Elastomerschichten und den Dichtlippen gehalten wird. Die Dichtung kann Dichtbereiche aus unterschiedlichen organischen Elastomerwerkstoffen besitzen um für jedes Medium bzw. jeden Anwendungsfall einen optimal angepassten Werkstoff einzusetzen. Eine besondere Form der Dichtung besitzt so genannte Abstandshalter oder Limiter, die die Verpressung der Dichtung begrenzen. Diese können entweder aus dem Trägermaterial durch umformen hergestellt werden oder durch zusätzliche Elemente die integriert werden.

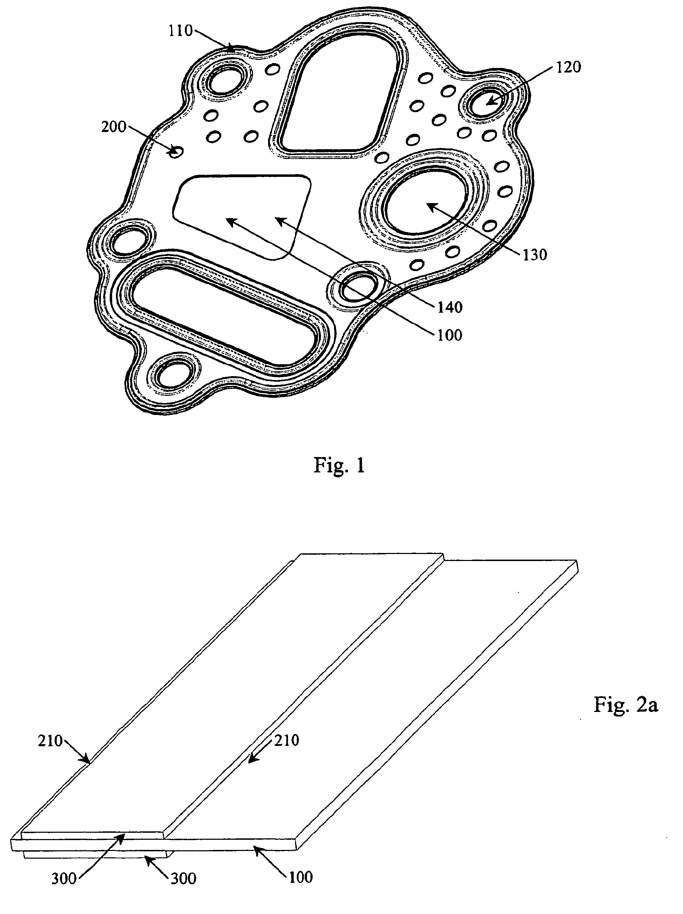

Fig. 1 zeigt eine Dichtung gemäß einer Ausführungsform der Erfindung. Die illustrierte Dichtung in Fig. 1 ist auf einem Träger bzw. Trägerblech 100 aufgebracht. Die Dichtung weist ferner beispielhaft und anwendungsbedingt eine Dichtlippe 110, abgedichtete Befestigungsöffnungen 120 und abgedichtete Öffnungen 120 auf. Optional ist die Dichtung mit einem dichtungsfreien Bereich 130 versehen. Bedingt durch den vorstehend beschriebenen Herstellungsprozess wiest die dargestellte Dichtung Fixierpunkte 200 auf, an denen das bzw. die verarbeitenden Werkzeuge angreifen können. Um die Dichtung bzw. den Träger während der Fertigung ausgerichtet zu fixieren.

Fig. 2a bis 2f zeigen schematische Dichtung gemäß Ausführungsformen der Erfindung. Die schematischen Darstellungen zeigen Modifikationen der erfindungsgemäßen Dichtung.

In Fig. 2a ist eine erste grundlegende Variante einen flächigen bzw. einer in einem Teilbereich flächigen organischen Elastomerdichtung gezeigt, die auf einen Träger 100 mittels vorstehend beschriebenem Spritzverfahren aufgebracht ist. Beispielhaft sind Dichtungsbereiche 300 beidseitig auf dem Träger 100 aufgebracht. In Alternative zu den in Fig. 1 dargestellten Fixierpunkten 200 wird die hier illustrierte Dichtung in den Bereichen 210 fixiert, d.h. lateral zu den dargestellten flächigen Dichtungsfläche 300 verlaufende Bereiche, auf die das bzw. die Werkzeuge fixierend angreifen.

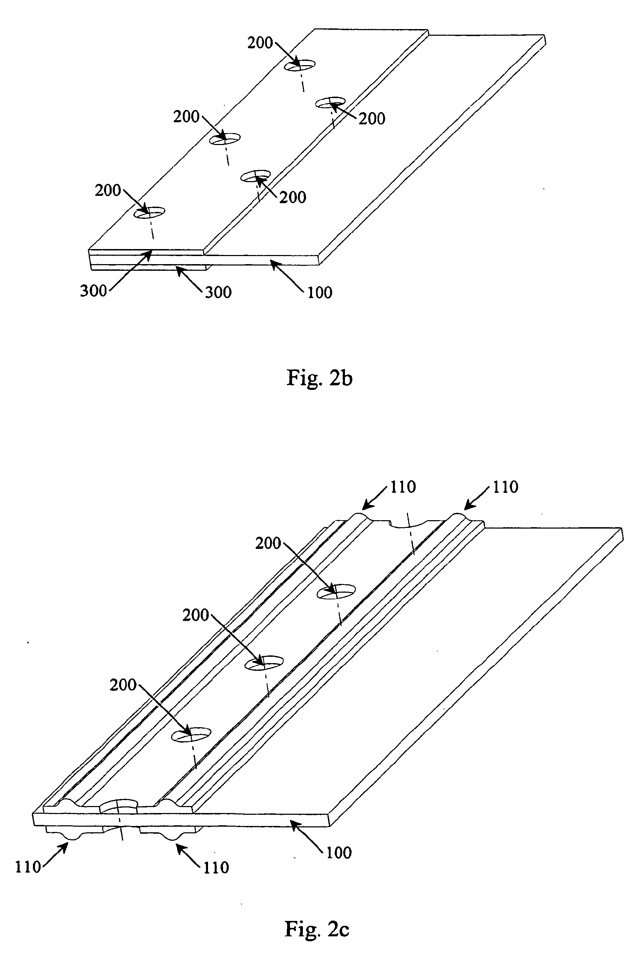

In Fig. 2b ist eine weitere Variante der einen flächigen bzw. einer in einem Teilbereich flächigen organischen Elastomerdichtung gezeigt, die auf einen Träger 100 mittels vorstehend beschriebenem Spritzverfahren aufgebracht ist. Diese Variante weist anstatt der vorstehend beschriebenen lateral verlaufenden Fixierungsbereiche eine Vielzahl an Fixierungspunkten 200 auf, in die das bzw. die Werkzeuge während des Herstellungsprozesses fixierend eingreifen.

Fig. 2c illustriert eine zweite grundlegende Variante einer beidseitigen Dichtung, die mit einer Lippengeometrie versehen ist. Die hier beispielhaft dargestellte Ausführungsform der Dichtung weist zwei Dichtlippen 110 auf jeder Seite des Trägers 100 auf, so dass resultierend eine Doppellippe erhalten wird. Die Fixierung erfolgt hierbei ebenfalls durch Fixierungspunkte 200. Eine Kombination der ersten und der zweiten Varianten ist möglich.

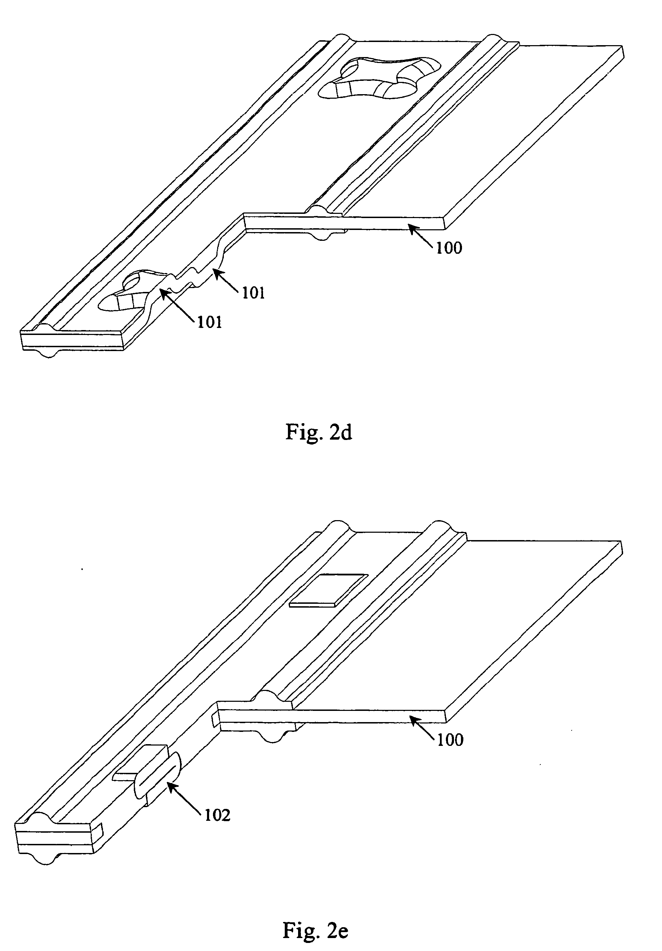

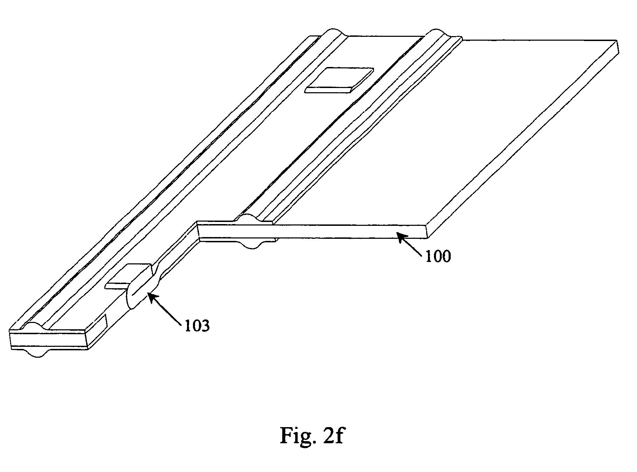

Fig. 2d bis 2f zeigen mögliche Variationen an Abstandhaltern bzw. Limitern, die in erfindungsgemäßen Dichtungen verwendet werden können. Die Variationen der Abstandhalter sind unter Bezugnahme auf die in Fig. 2c illustrierte Ausführungsform dargestellt, können jedoch ebenso in Kombination mit der ersten Variante nach Fig. 2a bzw. in Verbindung einer aus ersten und zweiten Variante erhaltenen Mischvariante verwendet werden. In Fig. 2d ist zunächst ein Abstandhalten durch einen geprägten Träger realisiert. Eine derartige Prägung kann durch Einprägen von Sicken, insbesondere Halbsicken, in den Träger erfolgen. In Fig. 2e ist weiterhin ein Abstandhalter durch einen beidseitig gefalteten Bereich des Trägers realisiert, so dass ein Abstandhalter mit einer Höhe gleich dem Faltungs-Vielfachen plus eins der Trägerdicke erhalten wird. Abschließend ist in Fig. 2f ein Abstandhalter durch eine einseitige Trägerfaltung in einem vorbestimmten Trägerbereich realisiert. Der Abstandhalter ist gemittelt, d.h. der Abstandhalter ist mittig zur Trägermittenebene angeordnet.

Abschließend soll bemerkt werden, dass das vorstehend beschriebene Verfahren die Herstellung von kostengünstigen Dichtungen auf der Basis von organischen Elastomerwerkstoffen als Dichtungs-Werkstoff ermöglicht. Das Verfahren gestattet sowohl das Aufbringen von dünnen, flächigen Dichtbereichen als auch eine Dichtgeometrie bzw. Dichtungskontur mit einer oder mehreren Dichtlippen, insbesondere Doppellippen. Die Lippen erlauben vorzugsweise größerer Toleranzen auszugleichen, so dass eine gewünschte Dichtwirkung sichergestellt werden kann. Als Trägerwerkstoff eignen sich eine Vielzahl an unterschiedlichen Werkstoffen wie zum Beispiel Metalle, bzw. Metallbleche Kunststoffe bzw. Kunststoffplatten, Papier bzw. papierähnliche Platten etc. Das vorgeschlagene Aufspritzen oder Anspritzen von Dichtungen auf Trägem trägt maßgeblich zur kostengünstigen Fertigung bei. Organische Elastomerwerkstoffe, die sich durch Aufspritzen oder Anspritzen verarbeiten lassen, stehen in einer Vielzahl zur Verfügung. Weiterhin gestattet das im Spritzprozess zum Einsatz kommende Werkzeug eine große Gestaltungsfreiheit in der Dichtungsgeometrie. Eine derartige Gestaltungsfreiheit ist bei herkömmlichen Verfahren nicht gegeben. Die erfindungsgemäße Dichtung kombiniert unterschiedliche Dichtungswerkstoffe in verschiedenen Teilbereichen, wobei die Dichtungswerkstoffe ferner auf den Träger aufgespritzt oder an den Träger angespritzt werden.

## Patentansprüche

1. Verfahren zum Herstellen einer Dichtung in einem kontinuierlichen Prozess, umfassend:
- Bereitstellen eines Trägers für die Dichtung;
- Kontinuierliches Zuführen des Trägers zu einer Spritzvorrichtung;
- Bereitstellen zumindest eines organischen Elastomerwerkstoffs;
- Zyklisches einseitiges oder beidseitiges Aufbringen des zumindest einen organischen Elastomerwerkstoffs auf den Träger als Dichtung mittels Aufspritzen, wobei beim Aufbringen des zumindest einen organischen Elastomer-werkstoffs auf den Träger bereichsweise verschiedene organische Elastomerwerkstoffe zur Ausbildung der Dichtung aufgebracht werden;
- Ausrichten der Dichtung mittels Fixierbereiche während des Aufspritzens, wobei die Fixierbereiche ein oder mehrere Fixierpunkt und/oder längliche Fixierbereiche umfassen, an denen ein Werkzeug führend und/oder ausrichtend an der Dichtung angreift; und
- Freistanzen der Dichtung.

2. Verfahren nach Anspruch 1, umfassend ferner:
- Anspritzen des zumindest einen organischen Elastomerwerkstoffs ebenfalls angespritzt wird,
wobei der aufgespritzte Elastomerwerkstoff von dem Träger unterstützend getragen wird und wobei der angespritzte Elastomerwerkstoff an den Träger koppelt und sich im Wesentlichen in trägerlose Bereiche erstreckt.

3. Verfahren nach einem der Ansprüche 1 oder 2, umfassend:
- Trocknen und/oder Tempern des organischen Elastomerwerkstoffs zum Vulkanisieren des organischen Elastomerwerkstoffs.

4. Verfahren nach einem der vorstehenden Ansprüche, umfassend:
- Vorstanzen des Trägers vor dem Aufbringen des organischen Elastomerwerkstoffs.

5. Verfahren nach einem der vorstehenden Ansprüche, umfassend: Prägen und/oder Stanzen der Dichtung.

6. Verfahren nach einem der vorstehenden Ansprüche, umfassend:
- Prägen und/oder Falten der Dichtung zum Ausbilden von Abstandelement in Form des bereichsweise gefalteten Trägers oder des bereichsweise geprägten Trägers, um eine Verpressung der Dichtung zu begrenzen.

7. Verfahren nach einem der vorstehenden Ansprüche, wobei:
- die Dichtung mittels Fixierbereiche ausgerichtet wird, die Fixierbereiche ein oder mehrere Fixierpunkt und/oder längliche Fixierbereiche umfassen, an denen das Werkzeug zum Aufspritzen führend und/oder ausrichtend an der Dichtung angreift.

8. Verfahren nach einem der vorstehenden Ansprüche, umfassend:
- Bereitstellen des zumindest eine organische Elastomerwerkstoffs mit einem Anteil an flüchtigen Bestandteilen, der mittels thermo-gravimetrischer Analyse bei 150°C über 0,5 Stunden gemessen wird, von im wesentlichen ungefähr 0,1% und kleiner aufweist, wobei die Dichtung Verwendung in Brennstoffzellen findet.

9. Verfahren nach einem der vorstehenden Ansprüche, wobei die Dichtung flächige Dichtbereiche und Dichtbereiche mit einer oder mehreren Dichtlippen aufweist, die mittels eines Werkzeugs mittels des Aufspritzens ausgebildet werden.

10. Verfahren nach einem der vorstehenden Ansprüche, wobei als organische Elastomerwerkstoff ein Werkstoff aus Fluorkautschuk (FPM), Acrylatkautschuk, Polyacrylat-Acrylharz, Polyacrylat (ACM), Ethylenacrylat (AEM), Ethylenpropylen (EPDM) und/oder Hydriernitril (HNBR) bereitgestellt wird.

11. Verfahren nach einem der vorstehenden Ansprüche, wobei der zumindest eine organische Elastomerwerkstoff mit einer Mooney-Viskosität ML (1+4) bei 100°C im Bereich von 20 bis 100 bereitgestellt wird.

12. Verfahren nach einem der vorstehenden Ansprüche, wobei der zumindest eine organische Elastomerwerkstoff mit einer Mooney-Viskosität ML (1+4) bei 100°C im Bereich von 25 bis 52 bereitgestellt wird.

13. Verfahren nach einem der vorstehenden Ansprüche, wobei der zumindest eine bereitgestellte organische Elastomerwerkstoff im Wesentlichen einen Anteil an flüchtigen Bestandteilen, der mittels thermogravimetrischer Analyse bei 150°C über 0,5 Stunden gemessen wird, von ungefähr 0,1% und kleiner aufweist so dass die Dichtung sich zur Verwendung in Brennstoffzellen eignet.

## Claims

1. Method for the manufacture of a gasket in a continuous process, comprising:
- provision of a substrate;
- continuous feeding of the substrate to a spraying device;
- provision of at least one organic elastomer material;
- cyclic unilateral or bilateral application of at least one organic elastomer material onto the substrate as a gasket by means of spray-application, whereby on application of the at least one organic elastomer material onto the substrate, different organic elastomer materials are applied in certain areas to form the gasket;
- alignment of the gasket by means of fixing regions during spray-application, whereby the fixing regions comprise one or a plurality of fixing points and/or elongated fixing regions, on which a tool engages in a guiding and/or aligning manner; and
- stamping free of the gasket.

2. Method according to claim 1, further comprising:
- spraying onto of the at least one organic elastomer material that is likewise sprayed onto,
whereby the elastomer material spray-applied is borne supportively by the substrate and whereby the elastomer material sprayed onto is joined to the substrate and extends substantially into regions free from substrate.

3. Method according to one of claims 1 or 2, comprising:
- drying and/or tempering of the organic elastomer material for vulcanisation of said organic elastomer material.

4. Method according to one of the preceding claims, comprising:
- pre-stamping of the substrate prior to application of the organic elastomer material.

5. Method according to one of the preceding claims, comprising: embossing and/or stamping of the gasket.

6. Method according to one of the preceding claims, comprising:
- embossing and/or folding of the gasket for forming a spacer element in the shape of the substrate folded in certain areas or of the substrate embossed in certain areas in order to limit a compression of the gasket.

7. Method according to one of the preceding claims, whereby:
- the gasket is aligned by means of fixing regions, the fixing regions comprising one or a plurality of fixing points and/or elongated fixing regions, on which the tool for spray application engages in a guiding and/or aligning manner.

8. Method according to one of the preceding claims, comprising:
- provision of the at least one organic elastomer material with a proportion of volatile constituents, measured by means of thermogravimetric analysis over 0.5 hours at 150°C, of substantially approximately 0.1 % and less, whereby the gasket is used in fuel cells.

9. Method according to one of the preceding claims whereby the gasket has two-dimensional sealing regions and sealing regions with one or a plurality of sealing lips, which are formed by means of spray-application using a tool.

10. Method according to one of the preceding claims, whereby a material of fluorocarbon rubber (FPM), acrylate rubber, polyacrylate acrylic resin, polyacrylate (ACM), ethylene acrylic elastomer (AEM), ethylene propylene diene monomer (EPDM) and/or hydrogenated nitrile butadiene rubber (HNBR) is provided as the organic elastomer material.

11. Method according to one of the preceding claims, whereby the at least one organic elastomer material is provided with a Mooney viscosity ML (1+4) at 100°C in the range between 20 and 100.

12. Method according to one of the preceding claims, whereby the at least one organic elastomer material is provided with a Mooney viscosity ML (1+4) at 100°C in the range between 25 and 52.

13. Method according to one of the preceding claims, whereby the at least one organic elastomer material provided has substantially a proportion of volatile constituents, measured by means of thermogravimetric analysis over 0.5 hours at 150°C, of approximately 0.1 % and less such that the gasket is suitable for use in fuel cells.

## Revendications

1. Procédé de fabrication d'un joint au cours d'un processus continu, comportant les étapes suivantes consistant à :
- préparer un support pour le joint ;
- amener en continu le support à un dispositif d'injection ;
- préparer au moins un matériau élastomère organique ;
- appliquer de façon cyclique sur un côté ou sur les deux côtés le au moins un matériau élastomère organique sur le support en tant que joint par injection, différents matériaux élastomères organiques destinés à réaliser le joint étant appliqués par zones sur le support lors de l'application du au moins un matériau élastomère organique ;
- orienter le joint au moyen de zones de fixation pendant l'application par injection, les zones de fixation comportant un ou plusieurs points de fixation et/ou zones de fixation longitudinales, au niveau desquels un outil vient en prise avec le joint par guidage et/ou orientation ; et
- libérer le joint.

2. Procédé selon la revendication 1, comportant en outre l'étape consistant à :
- appliquer également par extrusion le un au moins matériau élastomère organique,
le matériau élastomère appliqué par injection étant supporté avec soutien par le support et le matériau élastomère appliqué par extrusion étant couplé au support et s'étendant sensiblement dans des zones exemptes de support.

3. Procédé selon l'une quelconque des revendications 1 ou 2, comportant l'étape consistant à :
- sécher et/ou tremper le matériau élastomère organique pour vulcaniser le matériau élastomère organique.

4. Procédé selon l'une quelconque des revendications précédentes, comportant l'étape consistant à :
- prédécouper le support avant l'application du matériau élastomère organique.

5. Procédé selon l'une quelconque des revendications précédentes, comportant l'étape consistant à : estamper et/ou découper le joint.

6. Procédé selon l'une quelconque des revendications précédentes, comportant l'étape consistant à :
- estamper et/ou plier le joint pour réaliser un élément d'écartement sous forme du support plié par zones ou du support estampé par zones, afin de limiter une compression du joint.

7. Procédé selon l'une quelconque des revendications précédentes :
- le joint étant orienté au moyen de zones de fixation, les zones de fixation comportant un ou plusieurs points de fixation et/ou zones de fixation longitudinales, au niveau desquels l'outil destiné à l'application par injection s'applique sur le joint par guidage et/ou orientation.

8. Procédé selon l'une quelconque des revendications précédentes, comportant l'étape consistant à :
- préparer le au moins un matériau élastomère organique comprenant une part de composants volatiles, qui est mesurée au moyen d'une analyse thermo-gravimétrique à 150°C pendant 0,5 heures, de sensiblement à peu près 0,1% et moins, le joint étant utilisé dans des piles à combustible.

9. Procédé selon l'une quelconque des revendications précédentes, le joint présentant des zones d'étanchéité planes et des zones d'étanchéité dotées d'une ou plusieurs lèvres d'étanchéité, lesquelles lèvres sont réalisées au moyen d'un outil d'application par injection.

10. Procédé selon l'une quelconque des revendications précédentes, un matériau issu du groupe comprenant le caoutchouc synthétique fluorocarboné (FPM), le caoutchouc acrylate, la résine acrylique polyacrylate, le polyacrylate (ACM), l'éthylène acrylique (AEM), l'éthylène propylène (EPDM) et/ou le nitrile hydrogéné (HNBR) étant préparé comme élastomère organique.

11. Procédé selon l'une quelconque des revendications précédentes, le au moins un matériau élastomère organique doté d'une viscosité Mooney ML (1+4) à 100°C dans la plage de 20 à 100 étant mis à disposition.

12. Procédé selon l'une quelconque des revendications précédentes, le au moins un matériau élastomère organique doté d'une viscosité Mooney ML (1+4) à 100°C dans la plage de 25 à 52 étant préparé.

13. Procédé selon l'une quelconque des revendications précédentes, le au moins un matériau élastomère préparé comprenant sensiblement une part de composants volatiles, qui est mesurée au moyen d'une analyse thermo-gravimétrique à 150°C pendant 0, 5 heures, d'à peu près 0,1% et moins, de sorte que le joint convient pour être utilisé dans des piles à combustible.
